# EUROPEAN PATENT APPLICATION

(11) **EP 0 539 054 A1**
(43) Date of publication of application: **28.04.1993**
(21) Application number: 92309112.8
(22) Date of filing: 07.10.1992
(51) Int. Cl.: G06K 7/10

(54) **Optical scanner apparatus**

(30) Priority: 23.10.1991 US 781622
(71) Applicant: NCR INTERNATIONAL INC., Dayton, Ohio 45479 (US)
(72) Inventor: Wike, Charles Kenneth, Jr., Sugar Hill, Georgia 30518 (US); Maddox, Craig Edward, Lilburn Georgia 30247 (US)
(74) Representative: Robinson, Robert George

(57) **Abstract**

This invention provides for a dual depth of field optical scanner (10) which employs a motor-driven mirrored spinner (16) including a plurality of interior facing (56,58,60) and exterior facing (62,64,66) reflective facet surfaces. Preferably, the facets (56-66) are arranged side-by-side at a predetermined distance from the spin axis (52) and, together, subtend an angle less than one-hundred-and-eighty degrees.

## Description

The present invention relates to optical scanners and more specifically to a dual depth of field optical scanner.

Optical scanners are well known for their usefulness in retail checkout and inventory control. Optical scanners generally employ a laser diode, the light from which is focused and collimated to produce a scanning beam. An optical transceiver directs the beam against a plurality of stationary mirrors, and collects the beam after it is reflected by a bar code label. A motor rotates the optical transceiver, and a detector receives the returning beam. The pattern produced by such a scanner is characterized by lines oriented at various angles to one another. An example of an optical scanner is disclosed in U.S. Patent No. 4,971,410.

High aspect ratio bar code labels present several problems for current scanners. In a scanner which emits a scan pattern characterized by only a single line, a chance exists that the scan line will not cross the bar code label from end to end. This type of scanner requires careful and time-consuming orientation of the item having the high aspect bar code label.

A bow tie pattern scanner has been proposed as a solution to this problem and as an alternative to a more complex omnidirectional scanner for addressing the problems associated with scanning high aspect ratio bar code labels. The bow tie pattern is a three-line pattern characterized by small angles between the scan lines. In the case of high aspect ratio bar code labels, the bow tie scanner requires less item orientation.

Multiple depths of field are desirable to increase the range from the scanner at which a scanner can read a given size of bar in a label, but have been difficult to implement. Some designs have included reciprocally oscillating mirrors.

It is an object of the present invention to provide an optical scanner for forming multiple depths-of-field and which is simple in construction and operation.

In accordance with the present invention there is provided optical scanner apparatus comprising light source means and a spinner member rotatable in operation about a spin axis and having reflection means for reflecting light from said source means, characterized in that said reflection means comprises a first plurality of reflective facets which are inwardly facing with respect to said axis and a second plurality of reflective facets which are outwardly facing with respect to said spin axis said first and second pluralities of facets reflecting the light from said source during rotation of said spinner member.

It is an advantageous feature of the present invention that the facets form exterior and interior facing reflective surfaces and are mounted side-by-side at predetermined elevation angles, and together, the facets subtend an angle less than one-hundred-and-eighty degrees.

The invention is described further hereinafter, by way of example only, with reference to the accompanying drawings in which:
Fig. 1 is a block diagram of an optical scanner of the present invention;
Fig. 2 is a perspective view of a spinner of an optical scanner embodying the present invention;
Fig. 3 is a bow tie scan pattern produced by a scanner of the present invention;
Fig. 4A is a top view of a representation of the mirrored spinner of Fig. 2 in a first position and the scan pattern produced in this position; and
Fig. 4B is a top view of a representation of the mirrored spinner of Fig. 2 in a second position and the scan pattern produced in this position.

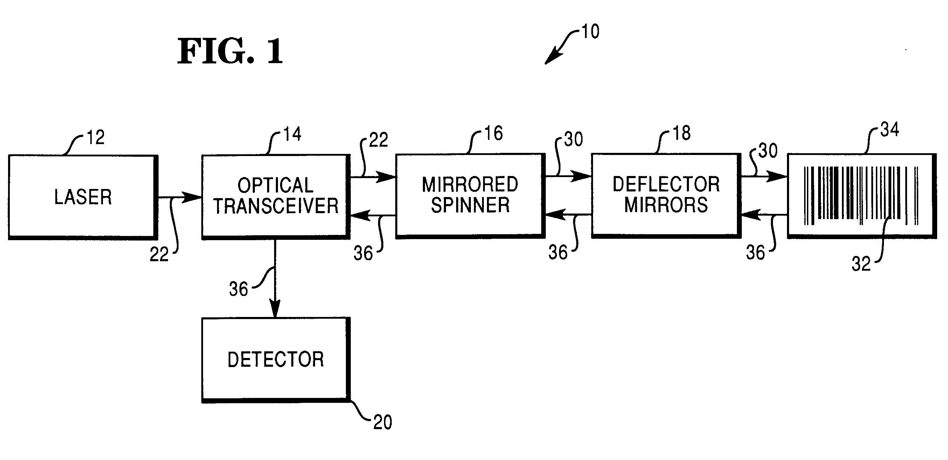

Referring now to Fig. 1, dual depth of field optical scanner 10 of the present invention includes laser 12, optical transceiver 14, mirrored spinner 16, deflector mirrors 18, and photodetector 20. Laser 12 includes a laser diode, a focusing lens, and a collimating aperture.

Beam 22 passes through optical transceiver 14, which includes a mirrored collecting surface and an aperture for passing beam 22.

Beam 22 contacts motor-driven mirrored spinner 16, which preferably has three two-sided mirrored facets for producing scan lines 30.

Deflector mirrors 18 direct scan lines 30 across a predetermined scanning path. Scan lines 30 impact bar code label 32 of item 34 and the reflected light 36 is redirected by spinner 16 to optical transceiver 14.

Optical transceiver 14 directs light 36 to photodetector 20, which generates signals representing the intensity of light 36.

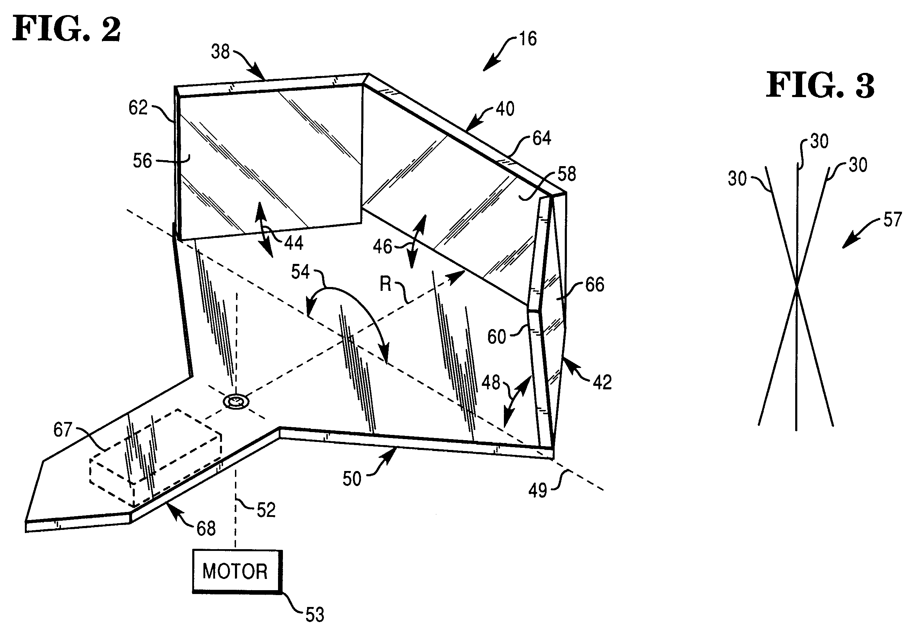

Turning now to Fig. 2, spinner 16 may be inexpensively constructed of moulded plastic. Facets 38-42 of spinner 16 produce three distinct scan lines 30 per side. Facets 38-42 have different elevation angles 44-48 with respect to upper side 49 of base 50 which determine the angular separation between scan lines 30. The closer angles 44-48 are to ninety degrees, the less omnidirectional the bow-tie pattern is. Preferably, elevation angle 44 is greater than ninety degrees, elevation angle 46 is about ninety degrees, and elevation angle 48 is less than ninety degrees.

Facets 38-42 are preferably located at a distance R from motor shaft 52 of motor 53. Together, facets 38-42 subtend an angle 54 of one-hundred-and-eighty degrees to minimize breaks in scan pattern production between illumination of mirrored facet sides 56-60 and 62-66. Spinner 16 is rotationally balanced by weight 67 built into side 68 of base 50.

Referring now to Fig. 3, scan lines 30 together produce bow tie pattern 57. The angular difference between scan lines 30 is determined by angles 44-48. Center facet 40 produces the center scan line, while facets 38 and 42 produce the other scan lines.

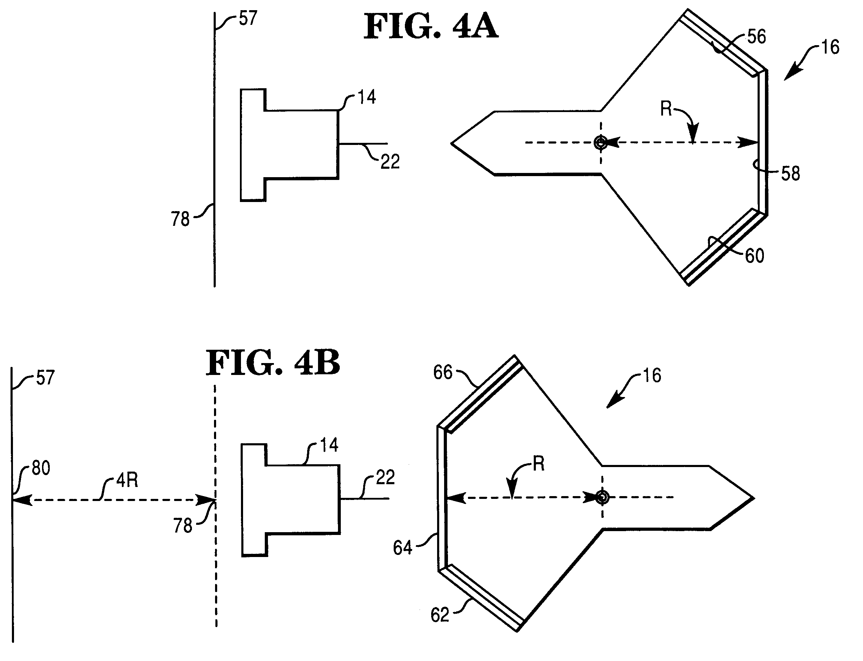

Referring now to Figs. 4A and 4B, spinner 16 rotates to produce bow tie scan pattern 57 at a near focal plane 78 and at a far focal plane 80. The rotation of mirrored spinner 16 through a first angle of one-hundred-and-eighty degrees exposes mirrored facet sides 56-60 to beam 22, while the rotation of mirrored spinner 16 through a second angle of one-hundred-and-eighty degrees exposes mirrored facet sides 62-66 to beam 22.

Since facets 38-42 are located at a distance R from axis 52, mirrored facet sides 62-66 are closer to laser 12 and present a higher angle of incidence to beam 22 and facet sides 56-60 are farther from laser 12 and present a lower angle of incidence to beam 22. The distance between focal planes 78 and 80 is therefore four times the distance R. This distance corresponds to a predetermined minimum probability of reading a bar code label situated half-way between focal planes 78 and 80. Preferably, this minimum probability is ninety-five per cent. In addition, focal planes 78 and 80 are preferably located at three inches (7.62cm) and nine inches (22.86cm) above the scanner 10, respectively.

## Claims

1. Optical scanner apparatus (10) comprising light source means (12) and a spinner member (16) rotatable in operation about a spin axis (52) and having reflection means (38,40,42) for reflecting light from said source means (12), characterized in that said reflection means (38,40,42) comprises a first plurality of reflective facets (56,58,60) which are inwardly facing with respect to said axis (52) and a second plurality of reflective facets (62,64,66) which are outwardly facing with respect to said spin axis said first and second pluralities of facets reflecting the light from said source during rotation of said spinner member (16).

2. Apparatus according to claim 1, characterized by a plurality of deflector mirrors (18) or receiving light reflected by said first and second plurality of facets (56,58,60,62,64,66).

3. Apparatus according to claim 1 or 2, characterized by an optical transceiver (14) and a detector (20), said transceiver (14) being arranged to reflect light from said source means (12) to said spinner member (16) and having a light collecting portion for reflecting light to said detector (20).

4. Apparatus according to claim 1, 2 or 3, characterized in that said spinner member (16) comprises a base member (50) upon which said reflection means (38,40,42) are mounted such that said facets (56,62;58,64;60,66) are mounted at different elevation angles.

5. Apparatus according to claim 4, characterized in that said base member (50) comprises a first half-portion upon which said reflection means is mounted and a second half-portion coupled to said first half-portion and having a counter-weight (67) provided thereon.

6. Apparatus according to claim 4 or 5, characterized in that a first facet (60) of said first plurality is mounted at an elevation angle of less than ninety degrees, a second facet (58) of said first plurality is mounted at an elevation angle of about ninety degrees, a third facet (56) of said first plurality is mounted at an elevation angle of more than ninety degrees.

7. Apparatus according to any one of the preceding claims, characterized in that said first plurality of facets (56,58,60) are disposed side-by-side and said second plurality of facets (62,64,66) are disposed side by side.

8. Apparatus according to any one of the preceding claims, characterized in that said first plurality of facets together subtend and angle of less than one-hundred-and-eighty degrees.

9. Apparatus according to any one of the preceding claims, characterized in that said reflection means comprises a plurality of double sided planar mirror members (38,40,42).

10. Apparatus according to claim 9, characterized in that said mirror members (38,40,42) are arranged to form part of a surface of a hollow polygen centred on said spin axis (52)
